# EUROPÄISCHE PATENTANMELDUNG

(11) **EP 2 808 304 A1**
(43) Veröffentlichungstag der Anmeldung: **03.12.2014**
(21) Anmeldenummer: 14170033.6
(22) Anmeldetag: 27.05.2014
(51) Int. Cl.: C02F 1/04, C02F 1/58, C02F 1/66, C02F 1/20, C01C 1/02, C02F 101/16, C02F 103/20

(54) **Verfahren und Anlage zur Behandlung von wässrigen, organischen Rückständen**

(30) Priorität: 27.05.2013 DE 102013105396
(71) Anmelder: MKR Metzger GmbH RECYCLINGSYSTEME, 86653 Monheim (DE)
(72) Erfinder: Metzger, Anderl, 86653 Monheim (DE); Xalter, Ralf, 86650 Wemding (DE)
(74) Vertreter: Cremer, Ulrike Theresia

(57) **Zusammenfassung**

Die vorliegende Erfindung betrifft ein Verfahren zur Behandlung von wässrigen, organischen, Ammoniak und/oder Ammoniumionen enthaltenden Rückständen (2) aus anaeroben Prozessen. Die Rückstände (2) werden durch Verdampfen (1) eingedickt, wodurch ein Konzentrat (7) und ein mit Ammoniak beladener Brüden (6) entstehen. Erfindungsgemäß wird der im Verdampfer (1) entstehende ammoniakhaltige Brüden (6) in zumindest einen Brüdenwäscher (50) eingeleitet und durch diesen hindurch geleitet wird, wobei in den zumindest einen Brüdenwäscher (50) eine Säure (9) eindosiert wird. Die Säure (9) reagiert mit dem Ammoniak zu einer Ammoniumlösung (10), so dass der aus dem zumindest einen Brüdenwäscher (50) austretende Brüden (16) im Wesentlichen frei von Ammoniak ist. Ferner betrifft die Erfindung eine Anlage zur Behandlung von wässrigen, organischen, Ammoniak und/oder Ammoniumionen enthaltenden Rückständen.

## Beschreibung

### Stand der Technik

Die vorliegende Erfindung betrifft ein Verfahren zur Behandlung von wässrigen, organischen, Ammoniak und/oder Ammonium enthaltenden Rückständen aus anaeroben Prozessen sowie eine Anlage zur Durchführung des Verfahrens.

Insbesondere bei Biogasanlagen, aber auch bei Kläranlagen oder bei der Tierhaltung fallen verhältnismäßig große Mengen an Rückständen an. Häufig werden die Rückstände von Landwirten auf landwirtschaftliche Felder ausgebracht und zur Düngung genutzt. Insbesondere bei der Biogaserzeugung, genauer bedingt durch die zunehmende Anzahl an Biogasanlagen, ergibt sich für die Betreiber jedoch ein Problem, die anfallenden großen Mengen an Rückständen zu entsorgen. Verschärfend kommt hinzu, dass über die Wintermonate ein Ausbringen von Dünger auf die Felder gesetzlich verboten ist, so dass die Biogasanlagenbetreiber Lagerkapazitäten für die Wintermonate bereitstellen müssen. Darüberhinaus wird sich die Situation zukünftig noch weiter verschärfen, da die EU bereits eine weitere Einschränkung der Ausbringungszeiten vorbereitet.

Zudem gibt es in einigen Regionen ein erhöhtes Gülle- (Nährstoff-)aufkommen bedingt durch intensive Tierhaltung. Dadurch müssen große Mengen Gülle bzw. Gärreste aus Biogasanlagen weite Strecken transportiert werden, um selbige in Regionen zu bringen, die dafür noch aufnahmefähig sind.

Es ist deshalb wünschenswert, die genannten Rückstände so weiterzuverarbeiten, dass die Lagerkapazitäten gering gehalten werden und sich für beispielsweise den Biogasanlagenbetreiber ein wirtschaftlicher Vorteil insgesamt ergibt, oder sich zumindest die Transporte über weite Strecken wirtschaftlich darstellen lassen.

Ein Ansatz hierzu ist das Verdampfen der Rückstände zu einem Konzentrat. Das Konzentrat kann soweit getrocknet werden, dass es als Trockendünger ausgebracht werden kann, was die Lagerhaltung wesentlich vereinfacht. Außerdem sind, je nach Ausgangsprodukt, die Lagervolumina stark reduziert. Neben dem Konzentrat der Rückstände entsteht bei der Verdampfung ein mit Ammoniak beladener Brüden. Der Ammoniak ist nach dem Abkühlen des Brüden im Kondensat enthalten. Infolgedessen kann das aus dem Verdampfungsvorgang stammende Kondensat nicht in Oberflächengewässer wie Bäche oder Flüsse eingeleitet werden. Besonders hoch ist der Flüssigkeitsanteil in Biogasanlagen, die überwiegend auf Gülle oder Abfallvergärung basierend betrieben werden.

Die deutsche Patentanmeldung DE 10 2010 017 334 A1 der Anmelderin hat sich diesem Problem bereits im Jahr 2010 gewidmet. Die darin beschriebene Erfindung sieht eine Nachbehandlung des Kondensats vor, indem der Ammoniak aus dem Kondensat gestrippt wird.

Ein ähnlicher Ansatz wird in der PCT-Anmeldung WO 2012/109737 A1 gewählt. Der bei einem Verdampfungsvorgang entstehende Ammoniak-beladene Brüden wird kondensiert und das Kondensat wird anschließend in einem sog. Ammoniakwiedergewinnungssystem einem Strippvorgang unterzogen.

### Aufgabenstellung

Das in der vorstehend angegebenen deutschen Patentanmeldung beschriebene Verfahren stellte sich jedoch als recht aufwändig heraus, so dass sich vorliegend die Aufgabe stellte, wässrige, organische, Ammoniak und/oder Ammoniumionen enthaltende Rückstände aus anaeroben Prozessen, welche durch Verdampfen eingedickt werden, so weiterzuverarbeiten, dass ein Wirtschaftsdünger und Abwasser mit stark reduziertem Ammoniak-/Ammoniumgehalt entstehen. Ziel ist insbesondere eine Vereinfachung der bekannten Verfahren zur Weiterbehandlung des beim Verdampfen entstehenden mit Ammoniak beladenen Brüdens.

### Erfindungsbeschreibung

Die Aufgabe wird gelöst durch ein Verfahren nach Anspruch 1 und eine Anlage nach Anspruch 9. Vorteilhafte Ausgestaltungen ergeben sich aus den Unteransprüchen.

Wie im Stand der Technik bekannt, werden wässrige, organische Rückstände aus anaeroben Prozessen, die Ammoniak und/oder Ammoniumionen enthalten, durch Verdampfen eingedickt. Die Rückstände stammen beispielsweise aus der Biogaserzeugung, aus Faultürmen von Kläranlagen oder aus Tierhaltungen. Häufig werden derartige Rückstände auch als Gärreste bezeichnet. Durch das Verdampfen entsteht ein Konzentrat, das entsprechend auch als Rückstands- oder Gärrestkonzentrat bezeichnet wird, welcher als Wirtschaftsdünger einsetzbar ist. Als Dampfphase entsteht ein mit Ammoniak beladener Brüden; in anderen Worten -

Wasserdampf, der mit gasförmigem Ammoniak vermischt ist.

Erfindungsgemäß wird dieser ammoniakhaltige Brüden ohne zwischengeschalteten Kondensationsschritt in einen Brüdenwäscher eingeleitet und durch diesen hindurchgeleitet. In dem Brüdenwäscher ist Säure vorhanden. Der im Brüden vorhandene Ammoniak reagiert mit der Säure. Der Ammoniak wirkt als Base, die entsprechend mit der Säure versalzt wird. Hierdurch entsteht eine Ammoniumlösung, in welcher der größte Teil des aus dem Brüden und damit aus den Rückständen stammenden Ammoniaks in Form eines Ammoniumsalzes enthalten ist. Infolgedessen ist der aus dem Brüdenwäscher austretende Brüden im Wesentlichen frei von Ammoniak. Nach Kondensation des aus dem Brüdenwäscher austretenden Brüden liegt der Ammonium-Stickstoff-Gehalt (NH₄-N) bei ≤ 10 mg/l.

Das nach Durchführung des erfindungsgemäßen Verfahrens entstandene Kondensat weist somit einen Ammonium-Stickstoff-Gehalt auf, welcher in der Regel eine unmittelbare Einleitung in Oberflächengewässer erlaubt. Zum Beispiel werden mit dem Wert von ≤ 10 mg/l die gesetzlichen Anforderungen an den Ablauf kommunaler Kläranlagen in Bayern erfüllt.

Anders als in den im Stand der Technik bekannten Verfahren wird der aus dem Verdampfer stammende Brüden nicht zunächst kondensiert und anschließend so weiterbehandelt, dass das Ammoniak aus dem Kondensat entfernt wird, sondern der ammoniakhaltige Brüden wird unmittelbar, d. h. sich weiterhin in der Dampfphase befindend, mit Säure zur Reaktion gebracht. Der Brüden durchläuft vor Einleitung in den Brüdenwäscher keine Aggregatzustandsänderung, sondern verbleibt in der Gasphase, auch als Brüdenphase zu bezeichnen. Hierdurch ergibt sich eine starke Vereinfachung des Verfahrens bei gleicher Effektivität.

Das vorliegende Verfahren ist wirtschaftlicher als bekannte Verfahren. Es entfällt ein Schritt, der Schritt des Kondensierens vor dem Schritt des Entfernens des Stickstoffs. Daraus ergibt sich ein reduzierter Energiebedarf und ein reduzierter Chemikalien- bzw. Reagenzienbedarf. Für das Strippen von Ammoniak, wie es aus dem Stand der Technik bekannt ist, muss dem Brüdenkondensat Wärme zugeführt werden da bei ca. 60 °C gestrippt wird. Außerdem wird noch elektrische Energie für ein Gebläse und die anschließende Kühlung benötigt. Zur Anpassung des pH-Werts für den Strippvorgang wird Lauge wie z. B. Natronlauge benötigt. Abschließend muss der pH-Wert für die Einleitung in Gewässer wieder neutralisiert werden, wofür erneut Chemikalien einzusetzen sind.

Anders bei der vorliegenden Erfindung - es wird lediglich Säure zur Ammoniakbindung gebraucht und eine minimale Energiemenge zum Betrieb einer Pumpe, um den Brüdenwäscher zu berieseln.

Als Produkte des erfindungsgemäßen Verfahrens ergeben sich ein Konzentrat, auch als Gärrestkonzentrat bezeichnet, Ammoniumlösung und, nach Kondensation des den Brüdenwäscher verlassenden gewaschenen Brüden, ein Kondensat, das praktisch frei von Ammoniumionen ist. Je nach Art und Herkunft des eingesetzten Gärrests ist eine Reduktion des Ammonium-Stickstoff-Gehalts in dem Kondensat soweit möglich, dass es unmittelbar in Oberflächengewässer eingeleitet werden kann.

Als Säurezusatz wird bevorzugt Schwefelsäure, Phosphorsäure und/oder Salpetersäure verwendet. Infolgedessen erhält man als Ammoniumlösung Ammoniumsulfatlösung, Ammoniumphosphatlösung bzw. Ammoniumnitratlösung. Sämtliche sind als Wirtschaftsdünger verwendbar. Besonders bevorzugt ist Schwefelsäure, da die entstehende Ammoniumsulfatlösung überaus häufig als Wirtschaftsdünger eingesetzt wird.

Bevorzugt erfolgt eine pH-Wert-Messung im Brüdenwäscher, beispielsweise indem der pH-Wert mit einer pH-Sonde gemessen wird. Bevorzugt erfolgt die Messung kontinuierlich.

Durch die Reaktion verbrauchte Säure wird ersetzt, indem neue Säure zugegeben wird. Beispielsweise geschieht dies, sobald der pH-Wert einen vorbestimmten Wert erreicht, beispielsweise einen pH-Wert von > 2. Ziel ist, eine möglichst vollständige Umsetzung des Ammoniaks, der im Brüden enthalten ist, zu erreichen.

Idealerweise wird sowohl die Säurekonzentration im Brüdenwäscher möglichst konstant gehalten als auch die Konzentration der entnommenen Ammoniumlösung. Besonders bevorzugt wäre es, wenn die Stoffkonzentration der Ammoniumlösung bestimmt werden könnte, d. h. dass bestimmt werden könnte, dass beispielsweise eine 15 %ige Ammoniumlösung oder eine 30 %ige Ammoniumlösung entnommen wird.

Die Säurekonzentration kann konstant gehalten werden, wie zuvor beschrieben durch Messen des pH-Wertes und entsprechendes Nachdosieren.

Zur Erreichung eines kontinuierlichen Ammoniumgehalts in der Ammoniumlösung wird erfindungsgemäß vorgeschlagen, das Volumen der eindosierten Säure zu messen, beispielsweise mit einem Durchflussmesser. Nach Zugabe einer vorbestimmten Menge an Säure zu dem Brüdenwäscher wird eine vorbestimmte Menge an Ammoniumlösung abgeführt. Durch diese Maßnahme wird die Konzentration der Ammoniumlösung praktisch konstant gehalten. Überdies ist es sogar möglich, den Ammoniumgehalt vorzubestimmen, indem unter der Voraussetzung eines identischen Volumens entsprechend häufig Ammoniumlösung abgeführt wird, wodurch der Ammoniumgehalt relativ niedrig gehalten wird, oder indem entsprechend seltener Ammoniumlösung abgeführt wird, wodurch sich die Ammoniumlösung aufkonzentrieren kann. In Kenntnis von eindosiertem Säurevolumen und Säurekonzentration kann so vorherbestimmt werden, mit welcher Konzentration die Ammoniumlösung abgeführt wird.

Im Brüdenwäscher sind bevorzugt Füllkörper vorhanden, welche von den Brüden überströmt werden. Erfindungsgemäß durchströmt der Brüden den Brüdenwäscher von unten nach oben, d. h. der Brüdeneinlass befindet sich im unteren Bereich des Brüdenwäschers und der Auslass des gewaschenen Brüden im oberen Bereich. Auf diese Art und Weise wird ein Gegenstromprinzip verwirklicht, da säurehaltige Lösung von oben über die Füllkörper verrieselt werden kann.

Das saure Waschmedium wird bevorzugt mittels einer Umwälzpumpe oben im Brüdenwäscher eingebracht und verteilt.

Es ist vorgesehen in einer bevorzugten Ausführung, dass das Kondensat über eine biologische Filterstufe nachgereinigt wird, um noch möglicherweise vorhandene organische Bestandteile abzureinigen bzw. abzubauen. Außerdem ist es unter Umständen erforderlich, den Ammoniak-/Ammoniumgehalt im Kondensat weiter zu reduzieren.

Das Verdampfen kann unter Vakuum erfolgen, beispielsweise bei einer Temperatur von zwischen 45 °C und 65 °C und bei einem Druck zwischen 100 und 250 mbar (10 - 25 kPa) absolut. Möglich ist es jedoch auch, den Verdampfer unter Atmosphärendruck zu betreiben, beispielsweise bei einer Temperatur von ca. 100 °C und einem Druck von ca. 1.000 mbar (100 kPa) absolut.

Ein besonderer Vorteil des Verfahrens liegt darin, dass es problemlos mehrstufig betrieben werden kann. Entsprechend sieht eine bevorzugte weitere Ausführungsform das Hintereinanderschalten mehrerer Stufen, jeweils aufweisend Verdampfer und Brüdenwäscher, vor. Dem Verdampfer jeder Stufe wird frischer Rückstand zugefügt, der dort verdampft wird. Der ammoniakbeladene Brüden jedes Verdampfers wird gewaschen, wie zuvor beschrieben. Der gewaschene Brüden dient in der Folgestufe dazu, den Verdampfer zu beheizen. Es ergibt sich somit der Vorteil, dass lediglich die erste Stufe mittels Fremdbeheizung, beispielsweise mittels Abwärme aus einem Blockheizkraftwerk oder elektrisch, beheizt werden muss. Die Folgestufen werden durch den gewaschenen Brüden der jeweiligen Vorstufe beheizt. Durch die Wärmeabgabe kondensiert der gewaschene Brüden, so dass jeweils im Wesentlichen ammoniakfreies Kondensat abführbar ist. Der gewaschene Brüden der letzten Stufe wird vorzugsweise einem Kondensator zugeführt und dort kondensiert.

Die erfindungsgemäße Anlage weist zumindest einen Verdampfer auf, in welchen die wässrigen, organischen, Ammoniak und/oder Ammoniumionen enthaltenden organischen Rückstände aus anaeroben Prozessen einleitbar sind. Der zumindest eine Verdampfer ist beheizbar, so dass die Rückstände eingedickt werden können, wodurch ein Konzentrat und ein mit Ammoniak beladener Brüden entstehen.

Darüberhinaus weist die Anlage zumindest einen Brüdenwäscher auf, der sich an den Verdampfer anschließt, so dass der im Verdampfer entstehende ammoniakhaltige Brüden in den Brüdenwäscher einleitbar ist.

Ferner ist ein Mittel zum Hinzufügen von Säure zum Brüdenwäscher vorgesehen. Bevorzugt ist eine Säuredosiereinheit, z. B. eine Säuredosierpumpe, vorgesehen. Die dem Brüdenwäscher hinzugefügte Säure reagiert mit dem Ammoniak des Brüden zu einer Ammoniumlösung, so dass der Brüden, der aus dem Brüdenwäscher austritt, im Wesentlichen frei von Ammoniak ist.

Als zusätzlicher Anlagenbestandteil kann beispielsweise ein Kondensator vorgesehen sein, der sich an den Brüdenwäscher anschließt. In dem Kondensator ist der aus dem Brüdenwäscher austretende gewaschene Brüden kondensierbar.

Gemäß einer weiteren Ausführung kann ein mechanischer Brüdenverdichter vorgesehen sein, der den aus dem Verdampfer austretenden Brüden verdichtet und im Verdampfungsprozess wiederum nutzbar macht.

In dem Brüdenwäscher sind vorzugsweise Füllkörper vorhanden, welche von dem Brüden überströmt werden. Als bevorzugte Füllkörper sind Kunststofffüllkörper vorgesehen.

Gemäß einer weiteren bevorzugten Ausführung ist ein Austragsbehälter vorgesehen, welcher mit dem Brüdenwäscher verbunden ist. Der Austragsbehälter weist ein festes Volumen auf. In ihn ist Ammoniumlösung aus dem Brüdenwäscher einleitbar und auch wieder aus diesem ableitbar. Durch diese Maßnahme ist es möglich, dass wiederholt dasselbe Volumen an Ammoniumlösung aus dem Brüdenwäscher abführbar ist. Es wird der Austragsbehälter mit Ammoniumlösung befüllt, was die Entnahme eines festen Volumens an Ammoniumlösung aus dem Brüdenwäscher zur Folge hat. Die Ammoniumlösung wird aus dem Austragsbehälter abgeführt und der Austragsbehälter wird erneut befüllt. So kann beispielsweise in Abhängigkeit von der Zeit oder in Abhängigkeit eines bestimmten, dem Brüdenwäscher hinzugefügten Säurevolumens oder in Abhängigkeit des im Brüdenwäscher gemessenen pH-Werts der Ammoniumlösungsaustrag kontrolliert durchgeführt werden. Außerdem lässt sich durch diese Maßnahme der Stickstoffgehalt der Ammoniumlösung konstant halten. Durch das Eindosieren von stets der gleichen Menge an Säure und durch das Entnehmen von stets der gleichen Menge an Ammoniumlösung wird die entnommene Ammoniumlösung stets einen annähernd gleichen Stickstoffgehalt haben.

Bei einer mehrstufigen Anlage sind, wie oben anhand des erfindungsgemäßen Verfahrens beschrieben, mehrere Anlageneinheiten aus Verdampfer und Brüdenwäscher in Serie betreibbar. Auf jeder Stufe wird Gärrest verdampft und der entstehende ammoniakhaltige Brüden wird in einem Brüdenwäscher gewaschen. Erfindungsgemäß ist ein Wärmetauscher jeweils vorgesehen, so dass der aus dem Brüdenwäscher austretende Brüden zum Beheizen des Verdampfers der jeweils nächsten Stufe nutzbar ist.

### Figurenkurzbeschreibung

Die vorliegende Erfindung wird durch die beigefügten Figuren näher erläutert und beschrieben. Es zeigen
Figur 1 ein Schaubild eines ersten Ausführungsbeispiels des erfindungsgemäßen Verfahrens;
Figur 2 ein weiteres Ausführungsbeispiel des erfindungsgemäßen Verfahrens im Schaubild;
Figur 3 ein Ausführungsbeispiel für ein mehrstufiges Verfahren im Schaubild; und
Figur 4 einen Brüdenwäscher als Bestandteil der erfindungsgemäßen Anlage in Seitenansicht (Figur 4A), Schnittansicht (Figur 4B), Vorderansicht (Figur 4C) und ein Detail des Brüdenwäschers (Figur 4D).

### Figurenbeschreibung

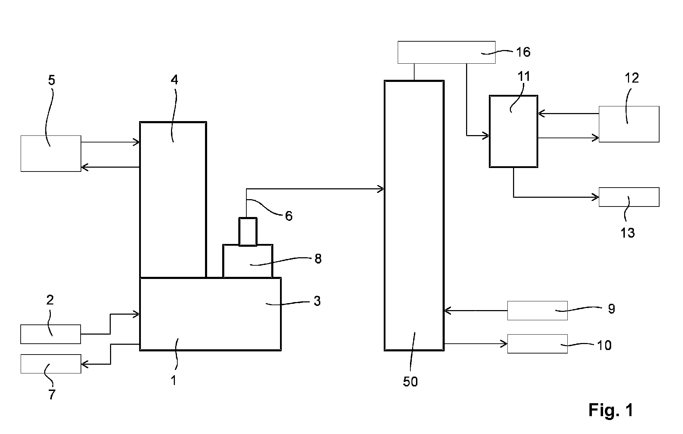

Figur 1 zeigt ein erstes Ausführungsbeispiel des erfindungsgemäßen Verfahrens, wobei das Verfahren einstufig betrieben wird. Einem Verdampfer 1 wird wässriger, organischer, Ammonium und/oder Ammoniak haltiger Rückstand 2, beispielsweise aus Biogasanlagen, Kläranlagen oder aus der Tierhaltung, beispielsweise ein Gärrest zugeführt. Der Prozessbehälter 3 des Verdampfers 1 wird über einen Wärmetauscher 4 mit einer Fremdbeheizung 5, die beispielsweise durch Abwärme aus einem Blockheizkraftwerk wie einer Biogasanlage oder elektrisch betreibbar ist, beheizt. Der Rückstand 2 wird in dem Verdampfer 1 erwärmt, wodurch das darin enthaltene Wasser verdampft. Es entsteht ein sogenannter Brüden, d. h. ein Wasserdampf, der zumindest eine weitere Substanz enthält. Im vorliegenden Fall wird durch den Verdampfungsvorgang Ammoniak freigesetzt, d. h. der Wasserdampf ist mit Ammoniak beladen - es entsteht ein ammoniakhaltiger Brüden 6.

Neben dem Brüden 6 entsteht ein Konzentrat 7 aus den eingedickten Rückständen 2. Das Konzentrat 7 wird aus dem Verdampfer 1 abgeführt und ist entweder unmittelbar als Wirtschaftsdünger verwendbar oder kann getrocknet werden, wodurch ein lagerungsfähiger Wirtschaftsdünger entsteht.

In der Ausführung der Figur 1 ist ein Entschäumer 8 vorgesehen, der sich an den Verdampfer 1 anschließt. Der Brüden 6 wird durch diesen hindurchgeleitet und gelangt noch in der Gasphase sich befindend in den Brüdenwäscher 50. Neben Brüden 6 wird dem Brüdenwäscher 50 Säure 9 hinzugefügt. Die Säure 9 reagiert mit dem im Brüden 6 enthaltenen Ammoniak, wodurch der Ammoniak aus dem Brüden 6 entfernt wird. Durch die Reaktion von Säure 9 und Ammoniak entsteht eine Lösung aus Ammoniumsalz und Wasser, als Ammoniumlösung 10 bezeichnet, die aus dem Brüdenwäscher 50 abgeführt wird.

Aus dem Brüdenwäscher wird überdies gewaschener Brüden 16 abgeführt und einem Kondensator 11 zugeführt, welcher unter Ausnutzung einer Fremdkühlung 12 den Brüden kondensiert. Anstelle des Begriffs "gewaschener Brüden" wird im Zusammenhang mit der vorliegenden Erfindung auch von "aus dem Brüdenwäscher austretender Brüden" gesprochen. Aus dem Kondensator 11 wird entsprechend ein Kondensat 13, auch als Destillat zu bezeichnen, abgeführt.

Aus dem in Figur 1 gezeigten Verfahren gehen folglich die Produkte Konzentrat 7, Ammoniumlösung 10 und Kondensat 13 hervor. Konzentrat 7 und Ammoniumlösung 10 sind jeweils als Wirtschaftsdünger einsetzbar. Das Kondensat 13 ist im Wesentlichen ammoniakund ammoniumfrei, d. h. es weist einen Ammonium-Stickstoff-Gehalt von ≤ 10 mg/l auf, und kann nach einer bevorzugten Ausführung ohne weitere Nachbehandlung in Oberflächengewässer eingeleitet werden.

Das in Figur 1 dargestellte Verfahren kann beispielsweise mit einem Massestrom von 1.000 kg/h, bei einer Temperatur zwischen 45 °C und 65 °C und bei einem Druck von ca. 100-200 mbar absolut betrieben werden. Die Verdampfung erfolgt bei dieser Ausführung unter Vakuum.

Durch das anhand der Figur 1 beschriebene Verfahren wird das Volumen der eingesetzten Rückstände 2 insofern stark reduziert, als die auszubringenden bzw. gegebenenfalls zu lagernden Produkte Konzentrat 7 und Ammoniumlösung 10 ein sehr viel geringeres Volumen haben als die zugeführten Rückstände 2. Der insbesondere bei mit Gülle betriebenen Biogasanlagen volumenbestimmende Anteil der Rückstände 2 Wasser ist in dem Produkt Kondensat 13 enthalten, das in Oberflächengewässer eingeleitet werden kann. Die insgesamt zu erzielende Volumenreduktion des erfindungsgemäßen Verfahrens ist abhängig vom Feststoffanteil des Rückstands 2, wie für einen Fachmann ersichtlich.

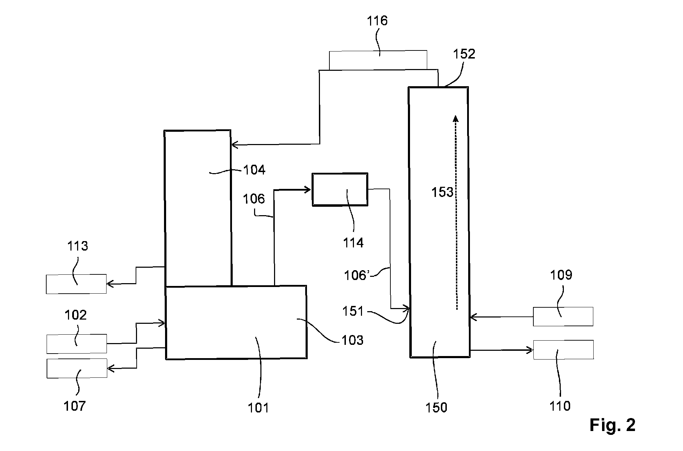

In Figur 2 ist ein weiteres Ausführungsbeispiel des erfindungsgemäßen Verfahrens als Schaubild dargestellt. Verwandte Anlagenbestandteile und Stoffe sind mit gegenüber Figur 1 um die Zahl 100 erhöhten Bezugszeichen bezeichnet.

Rückstand 102 wird dem Verdampfer 101 zugefügt; abgeführt wird ein Konzentrat 107. Anders als bei der Ausführung nach Figur 1 wird der Prozessbehälter 103 des Verdampfers 101 jedoch nicht mit einer Fremdbeheizung beheizt, sondern es wird stattdessen die Wärmeenergie des gewaschenen Brüdens 116 genutzt. Der gewaschene Brüden 116 wird einem Wärmetauscher 104 zugeführt. Die abgegebene Wärme wird genutzt, um den Prozessbehälter 103 zu beheizen. Es wird der gewaschene Brüden 116 durch die Wärmeabgabe kondensiert und entsprechend wird aus dem Wärmetauscher 104 ein Kondensat 113 abgeführt. Der Vorteil gegenüber dem Verfahren nach Figur 1 liegt darin, dass die im Brüden enthaltene Wärmeenergie genutzt werden kann, um den Verdampfer zu beheizen. Ein gesonderter Kondensator mit eigener Kühlung entfällt dadurch.

Der den Verdampfer 101 verlassende Brüden 106 wird einem Brüdenverdichter 114 zugeführt und entsprechend als verdichteter Brüden 106' einem Brüdenwäscher 150 zugeführt. Der Einlass 151 befindet sich bevorzugt, wie schematisch angedeutet in der Darstellung der Figur 2, im unteren Bereich des Brüdenwäschers 150. Der Brüden 106 bzw. der verdichtete Brüden 106' strömt folglich im unteren Bereich des Brüdenwäschers 150 ein, durchströmt diesen von unten nach oben, wie dargestellt durch den Pfeil 153, und verlässt den Brüdenwäscher durch den Auslass 152, der im oberen Bereich des Brüdenwäschers 150 angebracht ist, wie schematisch in Figur 2 dargestellt.

Wie anhand der Figur 1 beschrieben, wird dem Brüdenwäscher 150 Säure 109 zugefügt. Die Säure reagiert mit dem im Brüden 106 bzw. 106' enthaltenen Ammoniak zu einer Ammoniumlösung 110, die aus dem Brüdenwäscher 150 abgeführt wird.

Bei dem Verfahren nach Figur 2 wird folglich eine Energierückgewinnung durch mechanische Brüdenverdichtung eingesetzt zum Betrieb des Verdampfers 101.

Beispielhafte Daten für das in Figur 2 dargestellte erfindungsgemäße Verfahren sind ein Massenstrom von 320 kg/h, eine Betriebstemperatur von ca. 100 °C und ein Betrieb bei Atmosphärendruck, d. h. bei ungefähr 1.000 mbar absolut.

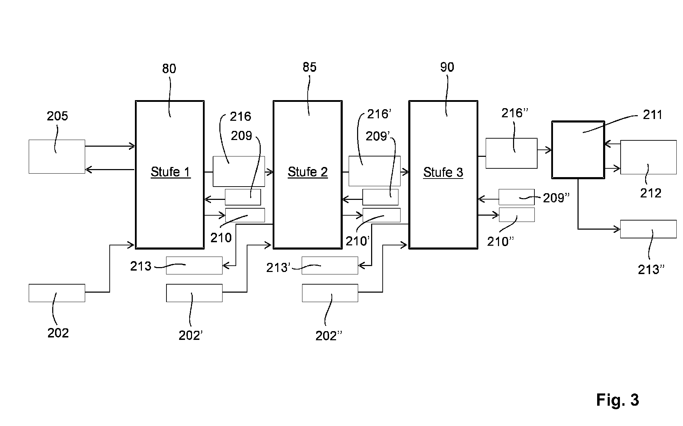

In Figur 3 sind ein Ausführungsbeispiel eines mehrstufigen Verfahrens und einer mehrstufigen Anlage dargestellt. Es sind insgesamt drei Stufen vorgesehen, mit Stufe 1, Stufe 2 und Stufe 3 bezeichnet. Um die Übersichtlichkeit der Darstellung zu wahren, sind Verdampfer und Brüdenwäscher jeweils als Einheit dargestellt, bezeichnet als Verdampfer-Brüdenwäscher-Einheit und bezeichnet mit dem Bezugszeichen 80 in Stufe 1, 85 in Stufe 2 und 90 in Stufe 3.

Wie anhand der Figuren 1 und 2 ausführlich beschrieben, erfolgt auf jeder Stufe das Verdampfen von Rückstand 202 in dem Verdampfer der jeweiligen Verdampfer-Brüdenwäscher-Einheit 80, 85 bzw. 90 auf der jeweiligen Stufe. Entsprechend wird Rückstand 202, 202' und 202" der jeweiligen Stufe zugeführt. Auf allen Stufen verlässt der ammoniakbeladene Brüden den Verdampfer, wird ohne Änderung seines Aggregatszustands dem Brüdenwäscher zugeführt und wird im Brüdenwäscher der Verdampfer-Brüdenwäscher-Einheit 80, 85 bzw. 90 vom Ammoniak befreit, aufgrund des Zusetzens von Säure 209, 209' bzw. 209" auf der jeweiligen Stufe. Der gewaschene Brüden 216 bzw. 216' bzw. 216" verlässt jeweils den Brüdenwäscher der Verdampfer-Brüdenwäscher-Einheit 80, 85 bzw. 90. Nach Kondensation weist der den Brüdenwäscher verlassende gewaschene Brüden einen aus Ammonium stammenden Stickstoffgehalt von maximal 10 mg/l auf. Als weiteres Produkt fällt auf jeder Stufe Ammoniumlösung 210, 210' bzw. 210" an. Ferner fällt auf jeder Stufe Konzentrat an, wie anhand der Figuren 1 und 2 beschrieben und dargestellt. Aus Gründen der Übersichtlichkeit ist dies jedoch in Figur 3 nicht dargestellt.

Besonders günstig an dem mehrstufigen Verfahren ist, dass nur auf der ersten Stufe, in Stufe 1, mit Hilfe einer Fremdbeheizung 205 der Verdampfer der Verdampfer-Brüdenwäscher-Einheit 80 beheizt wird. Die Verdampfer der Verdampfer-Brüdenwäscher-Einheiten 85 und 90 auf den Stufen 2 und 3 werden hingegen mit der im gewaschenen Brüden 216 bzw. 216' enthaltenen Wärmeenergie der jeweiligen Vorstufe beheizt, wie anhand Figur 2 beschrieben. Der gewaschene Brüden 216" der letzten Stufe, hier Stufe 3, wird einem Kondensator 211 zugeführt, der mit Hilfe einer Fremdkühlung 212 gekühlt ist und entsprechend wird der Brüden 216" zu Kondensat 213" kondensiert. Wie aus dem Schaubild ersichtlich wird Kondensat 213 bzw. 213' auf den Stufen 2 und 3 jeweils abgeführt, nachdem der gewaschene Brüden 216 bzw. 216' einen in Figur 3 nicht dargestellten Wärmetauscher zum Erhitzen des Verdampfers der Verdampfer-Brüdenwäscher-Einheiten 85 bzw. 90 durchlaufen hat.

Ein Vorteil des erfindungsgemäßen Verfahrens liegt darin, dass sehr einfach mehrere Stufen hintereinander geschaltet werden können, ohne dass ein über die jeweilige Stufe hinausgehender Geräteaufwand notwendig werde. Es wird einfach jeder Stufe neuer Rückstand zugeführt, der auf der jeweiligen Stufe verdampft wird. Der gewaschene Brüden der jeweiligen Vorstufe wird unmittelbar in den Wärmetauscher der nächsten Stufe eingeführt und dient dort zum Beheizen des Verdampfers.

Der Verdampfungsschritt im mehrstufigen Verfahren kann sowohl im Vakuum erfolgen, wie anhand Figur 1 beschrieben, als auch bei Atmosphärendruck, wie anhand Figur 2 beschrieben.

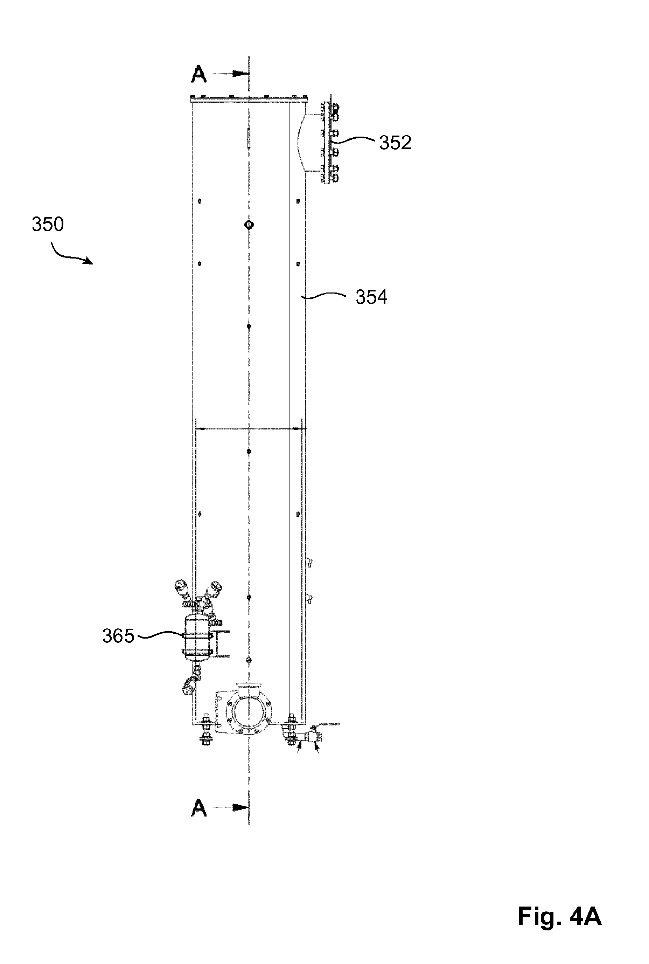

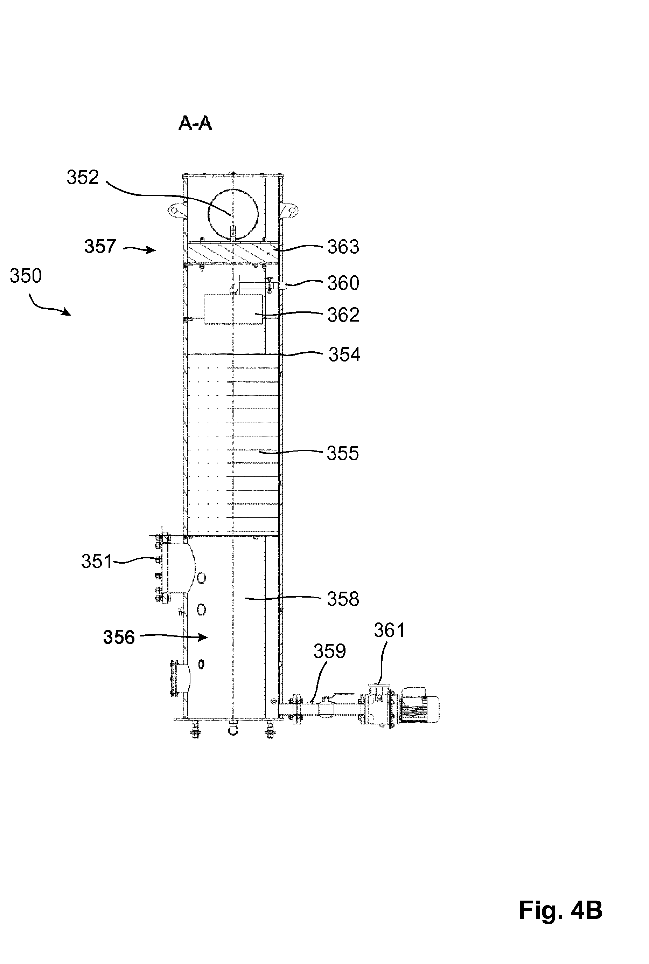

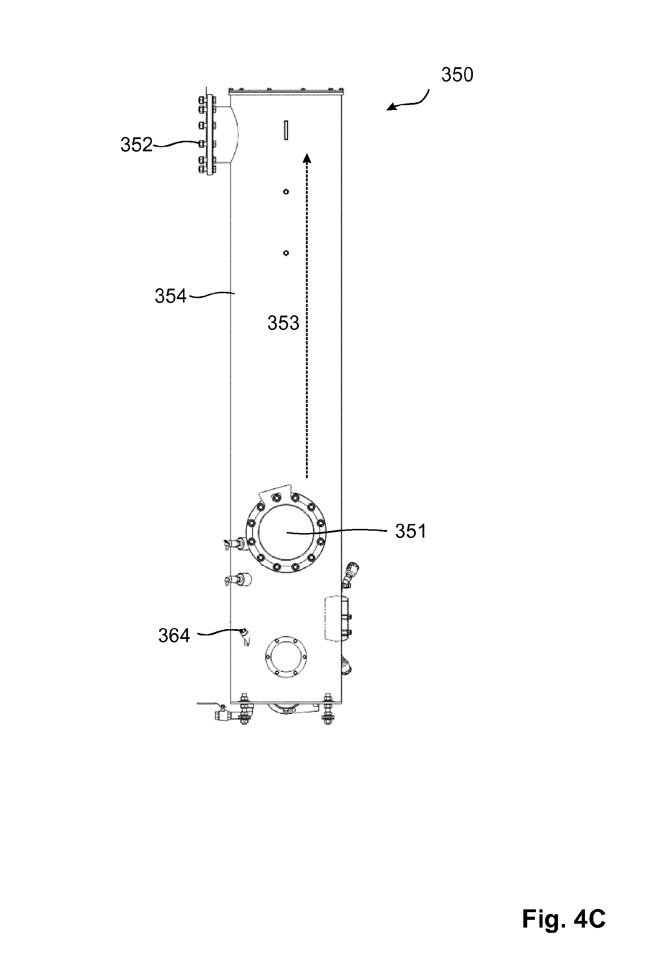

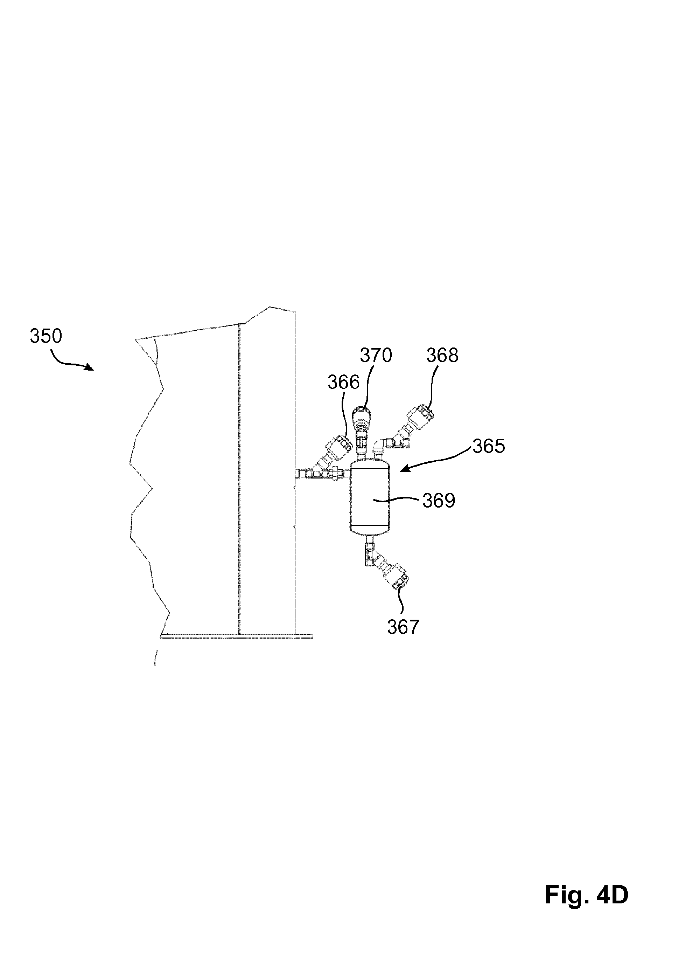

Figur 4 zeigt verschiedene Ansichten eines Ausführungsbeispiels eines erfindungsgemäßen Brüdenwäschers 350. In Figur 4A ist eine Seitenansicht dargestellt, Figur 4B zeigt einen Schnitt entlang der Linie A-A in Figur 4A. Figur 4C schließlich zeigt eine Vorderansicht und in Figur 4D ist ein Detail vergrößert dargestellt.

Der Brüdenwäscher 350 weist einen Einlass 351 auf, über welchen der Brüden aus dem Verdampfer (siehe beispielsweise Brüden 6 aus dem Verdampfer 1 in Figur 1 und Brüden 106 aus dem Verdampfer 101 in Figur 2) zugeführt wird. Der Einlass 351 befindet sich im unteren Behälterbereich 356 des Brüdenwäschers 350. Der Brüden durchströmt den Brüdenwäscher 350 von unten nach oben, wie angedeutet durch den Pfeil 353 in Figur 4C.

Im Inneren des Behälters 354 des Brüdenwäschers 350 ist ein sogenannter Füllkörper 355 vorgesehen, über welchen Füllkörper der Brüden hinwegströmt und diesen umströmt auf seinem Weg vom Einlass 351 zum Auslass 352.

Im unteren Behälterbereich 356 ist eine Wasservorlage 358 vorhanden. Dem darin befindlichen Wasser ist Säure zugesetzt. Die Säure wird mit Hilfe einer Säuredosiereinheit 359 dem Behälter 354 zugeführt. Bevorzugt wird das Volumen der eingeleiteten Säure mit Hilfe eines Durchflussmessers (nicht dargestellt) gemessen. Mit Hilfe einer Umwälzpumpe 361 wird über extern des Brüdenwäschers 350 geführte Leitungen, die in Figur 4 nicht dargestellt sind, die Wasservorlage 358 umgewälzt und im oberen Behälterbereich 357 über den Umwälzanschluss 360 dem Brüdenwäscher 350 wieder zugeführt. Über einen Tropfenverteiler 362 wird die in den oberen Behälterbereich 357 gepumpte Wasservorlage 358 verteilt; sie wird sozusagen über den Füllkörper 355 verregnet. Der den Behälter 354 von unten nach oben durchströmende Brüden gelangt folglich in Kontakt mit der Wasservorlage 358 und damit mit der darin enthaltenen Säure. Es folgt die bereits anhand der vorherigen Figuren beschriebene Reaktion zwischen dem Ammoniak im Brüden und der Säure in der Wasservorlage. Am Tropfenabscheider 363 wird Ammoniumlösung abgeschieden und tropft in den unteren Behälterbereich 356.

Zur pH-Wert-Messung ist ein pH-Sensor 364, beispielsweise eine pH-Sonde, vorgesehen. Über diesen erfolgt bevorzugt kontinuierlich oder aber in gewissen Zeitabständen eine Kontrolle des in der Wasservorlage 358 vorherrschenden pH-Werts. Ist der pH-Wert über einen bestimmten Wert gestiegen, beispielsweise über einen pH-Wert von 2, so wird Säure über die Säuredosiereinheit 359 nachdosiert. Bevorzugt erfolgt dies automatisch, d. h. es ist eine Regelung vorgesehen, welche bei einem bestimmten pH-Wert dazu führt, dass die Säuredosiereinheit 359 betätigt und Säure dem Brüdenwäscher 350 zugeführt wird.

Ammoniumlösung wird in der dargestellten bevorzugten Ausführung mit Hilfe eines Austragsbehälters 365 dem Brüdenwäscher 350 entnommen. Der Austragsbehälter 365 hat, wie in Figur 4D ersichtlich ist, ein festes Volumen. Bei jedem Austrag über den Austragsbehälter 365 wird stets dasselbe Volumen an Ammoniumlösung ausgetragen. Das Einlassventil 366 ist in der Regel offen, ebenso das Druckausgleichsventil 370, d. h. der Behälter des Austragsbehälters 369 läuft voll. Soll der Inhalt des Austragsbehälters 365 ausgetragen werden, so werden das Einlassventil 366 und das Druckausgleichsventil 370 geschlossen und das Auslassventil 367 wird geöffnet. Parallel dazu wird die Druckluftzufuhr 368 geöffnet, es wird Druckluft dem Behälter 369 zugeführt und die darin enthaltene Ammoniumlösung wird aus diesem herausgedrückt. Abschließend werden die Ventile 367 und 368 geschlossen und die Ventile 366 und 370 werden wieder geöffnet, sodass der Behälter 369 wieder gefüllt wird.

Der Vorteil des Einsatzes eines erfindungsgemäßen Austragsbehälters liegt darin, dass ein definiertes Volumen an Ammoniumlösung abgeführt wird, wodurch es möglich wird, eine Ammoniumlösung mit gleichbleibender Konzentration herzustellen. Wenn Volumen und Konzentration der zugesetzten Säure bekannt sind, ist es möglich, die Ammoniumkonzentration in der Ammoniumlösung dadurch gleichbleibend zu halten, dass stets in einem gewissen, gleichbleibenden zeitlichen Intervall das stets gleichbleibende Volumen an Ammoniumlösung abgeführt wird. Wird häufiger Ammoniumlösung abgeführt als bei einem Vergleichsbeispiel, so kann sich Ammonium in der Ammoniumlösung nur auf eine geringere Konzentration aufkonzentrieren als wenn vergleichsweise selten ausgetragen wird. Besonders bevorzugt wird diese Vorgehensweise noch durch eine pH-Wert-Messung unterstützt, um so eine stets gleichbleibende Säurekonzentration im Brüdenwäscher sicher zu stellen.

### Bezugszeichenliste

- 1, 101: Verdampfer
- 2, 102, 202: Rückstand
- 3, 103: Prozessbehälter
- 4 , 104: Wärmetauscher
- 5,205: Fremdbeheizung
- 6, 106: Brüden
- 7, 107: Konzentrat
- 8: Entschäumer
- 9, 109, 209: Säure
- 10, 110, 210: Ammoniumlösung
- 11, 211: Kondensator
- 12,212: Fremdkühlung
- 13, 113,213: Kondensat
- 114: Brüdenverdichter
- 16, 116, 216: gewaschener Brüden
- 50, 150, 350: Brüdenwäscher
- 151, 351: Einlass
- 152, 352: Auslass
- 153, 353: Pfeil (Strömungsrichtung des Brüden)
- 354: Behälter
- 355: Füllkörper
- 356: unterer Behälterbereich
- 357: oberer Behälterbereich
- 358: Wasservorlage
- 359: Säuredosiereinheit
- 360: Umwälzanschluss
- 361: Umwälzpumpe
- 362: Tropfenverteiler
- 363: Tropfenabscheider
- 364: pH-Sensor
- 365: Austragsbehälter
- 366: Einlassventil
- 367: Auslassventil
- 368: Druckluftzufuhr
- 369: Behälter
- 370: Druckausgleichsventil
- 80, 85, 90: Verdampfer-Brüdenwäscher-Einheit

## Patentansprüche

1. Verfahren zur Behandlung von wässrigen, organischen, Ammoniak und/oder Ammoniumionen enthaltenden Rückständen (2, 102, 202, 202', 202") aus anaeroben Prozessen, insbesondere aus der Biogaserzeugung und/oder aus Faultürmen von Kläranlagen und/oder aus Tierhaltungen, insbesondere fließfähigen Rückständen, wobei die Rückstände (2, 102, 202, 202', 202") durch Verdampfen eingedickt werden, wodurch ein Konzentrat (7, 107) und ein mit Ammoniak beladener Brüden (6, 106, 106') entstehen, **dadurch gekennzeichnet, dass**
der im Verdampfer (1, 101) entstehende ammoniakhaltige Brüden (6, 106, 106') ohne Aggregatszustandsänderung und sich weiterhin in der Dampfphase befindend in zumindest einen Brüdenwäscher (50, 150, 350) eingeleitet und durch diesen hindurch geleitet wird, wobei in den zumindest einen Brüdenwäscher (50, 150, 350) eine Säure (9, 109, 209, 209', 209") eindosiert wird, wobei die Säure (9, 109, 209, 209', 209") mit dem Ammoniak zu einer Ammoniumlösung (10, 110, 210, 210', 210") reagiert, so dass der aus dem zumindest einen Brüdenwäscher (50, 150, 350) austretende Brüden (16, 116, 216, 216', 216") nach Kondensation einen Ammonium-Stickstoff-Gehalt von ≤ 10 mg/l aufweist.

2. Verfahren nach Patentanspruch 1, **dadurch gekennzeichnet, dass** der aus dem zumindest einen Brüdenwäscher (50, 150, 350) austretende Brüden (16, 116, 216, 216', 216") in zumindest einen Kondensator (11, 211) eingeleitet, insbesondere unmittelbar in zumindest einen Kondensator (11, 211) eingeleitet, und dort kondensiert wird, wodurch ein Kondensat (13, 113, 213, 213', 213") entsteht, das einen Ammonium-Stickstoff-Gehalt von ≤ 10 mg/l aufweist.

3. Verfahren nach einem der vorstehenden Patentansprüche, **dadurch gekennzeichnet, dass** die dem zumindest einen Brüdenwäscher (50, 150, 350) hinzugefügte Säure (9, 109, 209, 209', 209") Schwefelsäure, Phosphorsäure und/oder Salpetersäure ist, so dass als Ammoniumlösung (10, 110, 210, 210', 210") aus dem zumindest einen Brüdenwäscher (50, 150, 350) Ammoniumsulfatlösung, Ammoniumphosphatlösung und/oder Ammoniumnitratlösung ableitbar ist.

4. Verfahren nach einem der vorstehenden Patentansprüche, **dadurch gekennzeichnet, dass** eine Konzentration der Säure (9, 109, 209, 209', 209") in dem zumindest einen Brüdenwäscher (50, 150, 350) gemessen wird, insbesondere kontinuierlich gemessen wird, insbesondere ein pH-Wert mit einer pH-Sonde (364) gemessen wird, und
dass Säure (9, 109, 209, 209', 209") nachdosiert wird, sobald der pH-Wert über einem vorbestimmten Wert, insbesondere über einem pH-Wert von 2, liegt.

5. Verfahren nach einem der vorstehenden Patentansprüche, **dadurch gekennzeichnet, dass** ein Volumen der eindosierten Säure (9, 109, 209, 209', 209") gemessen wird, insbesondere mit einem Durchflussmesser gemessen wird, und dass, nachdem jeweils eine vorbestimmte Menge an Säure (9, 109, 209, 209', 209") in den zumindest einen Brüdenwäscher (50, 150, 350) eindosiert worden ist, jeweils eine vorbestimmte Menge an Ammoniumlösung (10, 110, 210, 210', 210") aus dem zumindest einen Brüdenwäscher (50, 150, 350) abgeführt wird, durch welche Maßnahme eine Stickstoffkonzentration der Ammoniumlösung (10, 110, 210, 210', 210") im Wesentlichen konstant gehalten wird.

6. Verfahren nach einem der vorstehenden Patentansprüche, **dadurch gekennzeichnet, dass** in dem zumindest einen Brüdenwäscher (50, 150, 350) Füllkörper (355) vorhanden sind und der Brüden (6, 106, 106') den zumindest einen Brüdenwäscher (50, 150, 350) von unten nach oben durchströmt (153, 353), wobei die Füllkörper (355) überströmt werden.

7. Verfahren nach einem der Patentansprüche 2 - 6, **dadurch gekennzeichnet, dass** das Kondensat (13, 113, 213, 213', 213") über eine biologische Filterstufe nachgereinigt wird.

8. Verfahren nach einem der vorstehenden Patentansprüche, wobei das Verfahren mehrstufig betrieben wird, indem in einer ersten Stufe in einem ersten Verdampfer (1, 101) Gärrest verdampft wird und der ammoniakbeladene Brüden (6, 106, 106') in einem ersten Brüdenwäscher (50, 150, 350), in welchen Säure (9, 109, 209, 209', 209") eindosiert wird, gewaschen wird, wobei der austretende Brüden (16, 116, 216) der ersten Stufe genutzt wird, um zumindest einen weiteren Verdampfer (1, 101) zu beheizen, in welchem wiederum Gärrest verdampft wird, und der dabei entstehende ammoniakbeladene Brüden (6, 106, 106') in zumindest einem weiteren Brüdenwäscher (50, 150, 350), in welchen Säure (9, 109, 209, 209', 209") eindosiert wird, gewaschen wird.

9. Anlage zur Behandlung von wässrigen, organischen, Ammoniak und/oder Ammoniumionen enthaltenden Rückständen (2, 102, 202, 202', 202") aus anaeroben Prozessen, insbesondere aus der Biogaserzeugung, insbesondere fließfähigen Rückständen, aufweisend die folgenden Bauteile:
- zumindest einen Verdampfer (1, 101), in welchen die Rückstände (2, 102, 202, 202', 202") einleitbar sind und welcher beheizbar ist, so dass die Rückstände (2, 102, 202, 202', 202") eingedickt werden können, wodurch ein Konzentrat (7, 107) und ein mit Ammoniak beladener Brüden (6, 106, 106') entstehen,
- zumindest einen Brüdenwäscher (50, 150, 350), der sich an den zumindest einen Verdampfer (1, 101) anschließt, so dass der in dem zumindest einen Verdampfer (1, 101) entstehende ammoniakhaltige Brüden (6, 106, 106') ohne Aggregatszustandsänderung und sich weiterhin in der Dampfphase befindend in den zumindest einen Brüdenwäscher (50, 150, 350) einleitbar ist,
- zumindest ein Mittel zum Hinzufügen von Säure (9, 109, 209, 209', 209") zu dem zumindest einen Brüdenwäscher (50, 150, 350), insbesondere zumindest eine Säuredosiereinheit (359), wobei die dem zumindest einen Brüdenwäscher (50, 150, 350) hinzugefügte Säure (9, 109, 209, 209', 209") mit dem Ammoniak zu einer Ammoniumlösung (10, 110, 210, 210', 210") reagiert, so dass der Brüden (16, 116, 216, 216', 216"), der aus dem zumindest einen Brüdenwäscher (50, 150, 350) austritt, nach Kondensation einen Ammonium-Stickstoff-Gehalt von ≤ 10 mg/l aufweist, zumindest einen Kondensator (11, 211), der sich an den zumindest einen Brüdenwäscher (50, 150, 350) anschließt und worin der aus dem zumindest einen Brüdenwäscher (50, 150, 350) austretende Brüden (16, 116, 216, 216', 216") kondensierbar ist;
und zumindest ein Mittel zum Austragen der Ammoniumlösung.

10. Anlage nach Patentanspruch 9, **dadurch gekennzeichnet, dass** in dem zumindest einen Brüdenwäscher (50, 150, 350) Füllkörper (355) vorhanden sind, welche von dem Brüden (6, 106, 106') überströmbar sind, wobei die Füllkörper (355) insbesondere Kunststofffüllkörper sind und wobei ein Brüdeneinlass in einem unteren Bereich und ein Auslass des gewaschenen Brüden in einem oberen Bereich des Brüdenwäschers angeordnet sind, so dass der Brüdenwäscher von dem Brüden von unten nach oben durchströmbar ist.

11. Anlage nach einem der Patentansprüche 9 - 10, **dadurch gekennzeichnet, dass** zumindest ein Wärmetauscher (4, 104) und zumindest ein mechanischer Brüdenverdichter (114) vorgesehen sind, mit welchen der zumindest eine Verdampfer (1, 101) beheizbar ist, wobei in dem Brüden (16, 116, 216, 216', 216"), der aus dem zumindest einen Brüdenwäscher (50, 150, 350) austritt, vorhandene Wärme zur Beheizung des zumindest einen Verdampfers (1, 101) nutzbar ist.

12. Anlage nach einem der Patentansprüche 9 - 11, **dadurch gekennzeichnet, dass** das zumindest eine Mittel zum Austragen der Ammoniumlösung ein Austragsbehälter (365) ist, der mit dem zumindest einen Brüdenwäscher (50, 150, 350) verbunden ist und der ein festes Volumen aufweist, in welchen Austragsbehälter (365) Ammoniumlösung (10, 110, 210, 210', 210") aus dem zumindest einen Brüdenwäscher (50, 150, 350) einleitbar ist und aus welchem zumindest einen Austragsbehälter (365) Ammoniumlösung (10, 110, 210, 210', 210") ableitbar ist, wodurch wiederholt dasselbe Volumen an Ammoniumlösung (10, 110, 210, 210', 210") aus dem zumindest einen Brüdenwäscher (50, 150, 350) austragbar ist.

13. Anlage nach einem der Patentansprüche 9 - 12, **dadurch gekennzeichnet, dass** die Anlage mehrstufig betreibbar ist, wobei mehrere Anlageneinheiten aus Verdampfer (1, 101) und Brüdenwäscher (50, 150, 350) in Serie betreibbar sind, so dass auf jeder Stufe Gärrest verdampft und der entstehende ammoniakhaltige Brüden (6, 106, 106') gewaschen werden, wobei aus dem Brüdenwäscher (50, 150, 350) austretender Brüden (16, 116, 216, 216', 216") über einen Wärmetauscher (4, 104) zum Beheizen des Verdampfers (1, 101) der nächsten Stufe nutzbar ist, und sich an die letzte Stufe ein Kondensator (11, 211) anschließt, in welchem der in der letzten Stufe entstehende, aus dem Brüdenwäscher (50, 150, 350) austretende Brüden (16, 116, 216, 216', 216") kondensiert wird.
